(19) Europäisches Patentamt

European Patent Office

Office européen des brevets

(11) EP 0 884 682 A2

(12) EUROPEAN PATENT APPLICATION

(43) Date of publication:
16.12.1998 Bulletin 1998/51

(51) Int. Cl.$^6$: G06F 12/08

(21) Application number: 98110499.5

(22) Date of filing: 09.06.1998

(84) Designated Contracting States:
AT BE CH CY DE DK ES FI FR GB GR IE IT LI LU
MC NL PT SE
Designated Extension States:
AL LT LV MK RO SI

(30) Priority: 09.06.1997 JP 150627/97

(71) Applicant: NEC CORPORATION
Tokyo (JP)

(72) Inventors:
• Kakisada, Emi
  Minato-ku, Tokyo (JP)
• Fujiwara, Yuji
  Nakahara-ku, Kawasaki-shi, Kanagawa (US)

(74) Representative:
Baronetzky, Klaus, Dipl.-Ing. et al
Patentanwälte
Dipl.-Ing. R. Splanemann, Dr. B. Reitzner, Dipl.-
Ing. K. Baronetzky
Tal 13
80331 München (DE)

(54) Cache memory management method for real time operating system

(57) In the RTOS (Real Time Operating System) of this invention, task programs are programmed without including a cache memory management process. The RTOS itself includes the process. Generally, the time of transmitting task code is longer than that of switching between tasks so that waiting time has occurred in a conventional RTOS. The RTOS of this invention loads a task to a cache bank at the frame before executing the task so that the waiting time does not occur and the cache memory management process cause no delay time.

FIG.10

## Description

Background of the invention:

This invention relates to a Real Time Operating System (will be abbreviated to RTOS hereinafter) for use in a digital signal processing system and, in particular, to an RTOS for managing a cache memory included in a microcomputer to process audio and visual signals.

In a conventional digital signal processing system of the type described which includes a microcomputer today, it is a recent trend that requirements have been made about a high speed processing and a very complex processing more and more. Such high speed and very complex processings need to inevitably prepare a high speed memory and a very large and intricate program formed by a huge amount of codes. This makes the digital signal processing system expensive.

In order to solve such a cost problem, consideration is made in the digital signal processing system about provision of a cache memory which can be operated in a high speed and which is comparatively inexpensive. In this case, the cache memory should be skillfully controlled or managed in the digital signal processing system.

Especially, a delay time must be shortened in the cache memory so as to operate the digital signal processing system at a real time when the digital signal processing device is applied to a portable telephone or the like. To this end, such cache memory management is usually executed by the use of hardware or software. In this event, when the hardware is used to manage the cache memory, a delay time inevitably occurs on a miss hit and, as a result, real time processing can not be expected by using the hardware.

On the other hand, when the software is used to manage the cache memory, a programmer who designs the software must completely understand and know all of program flows. However, in the case of constructing a multimedia system which executes a plurality of programs by a single processing unit at the same time or by linking together a plurality of programs each of which is programmed individually, it is too virtually difficult for the programmer to understand all program flows. Even if he or she can understand all program flows, it takes a very long time to develop the digital signal processing system because of intricacy of the software.

In the meanwhile, a plurality of programs are usually executed at the same time on RTOS. However, no consideration is made at all about a conventional RTOS which manages the cache memory without delays.

Summary of the Invention:

It is an object of this invention to provide a method of managing a cache memory which occurs no delay without the step of loading tasks in each of subtask.

It is another object of this invention to provide a machine readable medium storing a RTOS. The RTOS is capable of managing a cache memory without a superfluous delay on loading or switching a plurality of tasks.

It is still another object of this invention to provide an application device, such as a processing unit, an audio-visual signal processing system, and a portable telephone, which is operable in accordance with the RTOS without any superfluous delay.

According to this invention, the method is for use in successively executing a current task and a following task after the current task and comprises a following task detecting step of detecting the following task, a task discrimina-ting step of discriminating between the following task and each of loaded tasks which are currently stored in the cache memory together and which includes the current task, a target bank detecting step of detecting a ready one of the cache banks that is not loaded with the current task and that is ready for memorizing the following task, if the following task is not present in the cache memory as a result of discriminating the loaded tasks in the task discriminating step, and a loading step of loading the following task with the ready cache bank before the execution of the following task when the following task is not present in the cache memory.

According to this invention as a machine readable medium within a RTOS, the RTOS has a process of a cache management process which detects a following task to be executed after execution of the current task and which loads the following task with the cache memory, said cache management process being not included in the tasks.

According to this invention, the application device such as a processing unit, an audio-visual signal processing unit, and a portable telephone comprises following task detecting means for detecting the following task, task discriminating means for discriminating between the following task and each of loaded tasks which are currently stored in the cache memory together and which includes the current task, and target bank detecting means for detecting a ready one of the cache banks that is not loaded with the current task and that is ready for memorizing the following task, if the following task is not present in the cache memory by discriminating the loaded tasks in the task discriminating means, and loading means of loading the following task to the ready cache bank before the execution of the following task when the following task is not present in the cache memory.

Brief Description of the Drawing:

Fig. 1 shows a block diagram for use in schematically describing a part of a conventional RTOS;
Fig. 2 shows a block diagram for use in describing a cache memory management operation executed in accordance with the conventional RTOS;

Fig. 3 shows a structure of an interval table used in the conventional RTOS;

Fig. 4 shows a format of a cache tag management table used in the conventional RTOS;

Fig. 5 exemplifies a time chart for executing a plurality of tasks executed by the use of conventional RTOS;

Fig. 6 shows formats of a cache memory and a external memory which stores task codes;

Fig. 7 shows a table for use in describing a renewing operation of the interval table illustrated in Fig. 3

Fig. 8 shows a time chart for use in describing an operation of transmitting task codes to a cache memory under control of the conventional RTOS;

Fig. 9 shows a block diagram for use in schematically describing a part of an RTOS according to the present invention;

Fig. 10 shows a block diagram for use in describing a cache memory management operation executed in accordance with the present invention;

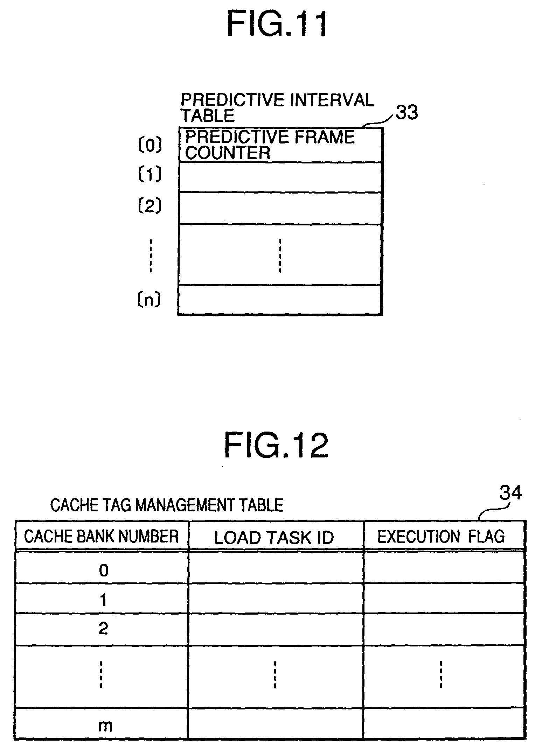

Fig. 11 shows a format of a predictive interval table uses in Fig. 10;

Fig. 12 shows a format of a cache tag management table used in Fig. 10;

Fig. 13 shows a diagram for use in an example of renewing operation carried out in the predictive interval table 33; and

Fig. 14 shows a timing chart for use in describing an operation of transmitting task codes to a cache memory in accordance with the present invention.

Description of the Preferred Embodiments:

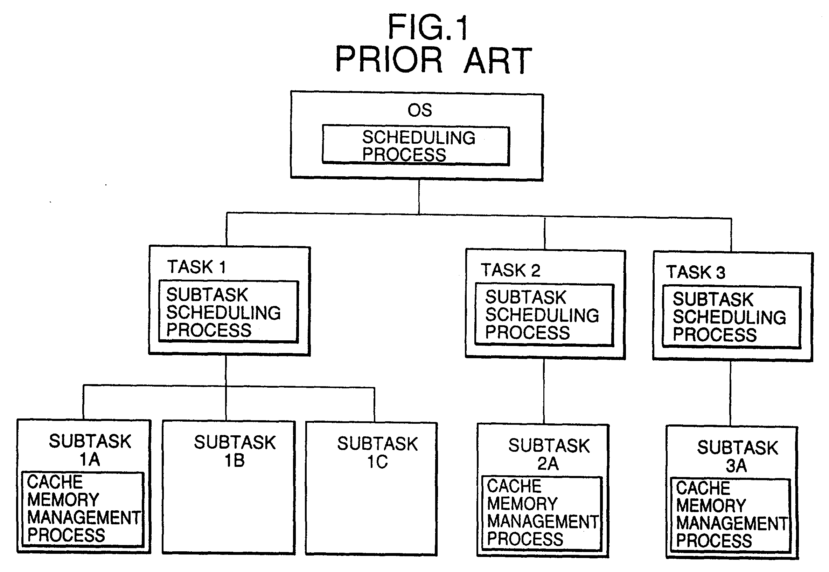

Referring to Fig. 1, description will be conceptually made about a conventional RTOS which serves to execute and to manage a plurality of tasks 1, 2, and 3 for a better understanding of the present invention.

In the illustrated example, the task 1 is divided into first, second, and third subtasks 1A, 1B, and 1C while the tasks 2 and 3 are assumed to manage subtasks 2A and 3A, respectively. Specifically, each task 1, 2, and 3 executes, for example, scheduling processing of each subtask. At any rate, cache memory management is carried out by predetermined ones of the subtasks, for example, 1A, 2A, and 3A to determine a next following task and to load the cache memory with the next task. From this fact, it is readily understood that a programmer should recognize and write a cache memory management process in every task.

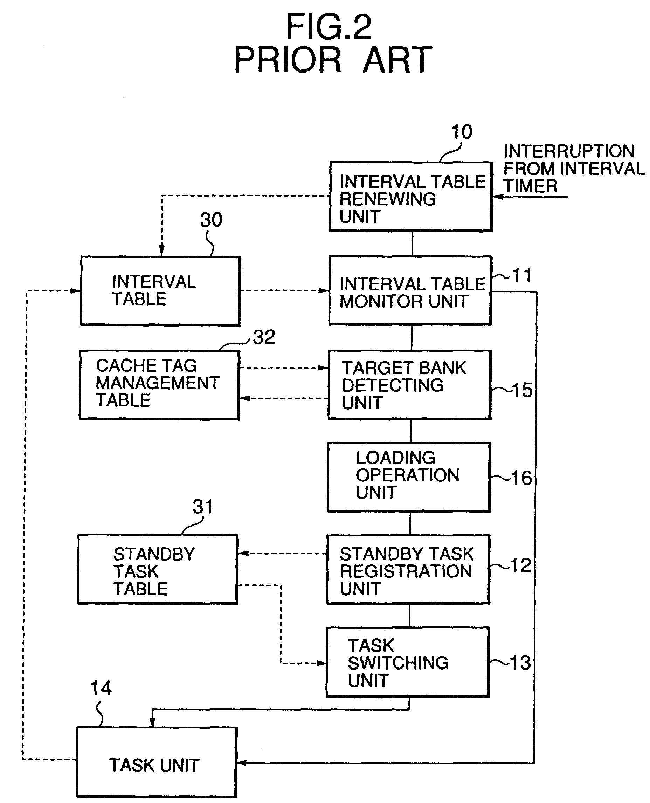

Referring to Fig. 2, the conventional RTOS has an interval table renewing unit 10 which is operable in response to an interruption sent from an interval timer (not shown) and which cooperates with an interval table 30 (will be mentioned later in detail). It suffices to say that the interval table 30 stores an execution start time. The interval table renewing unit 10 renews the execution start time at every interruption time of the interval timer.

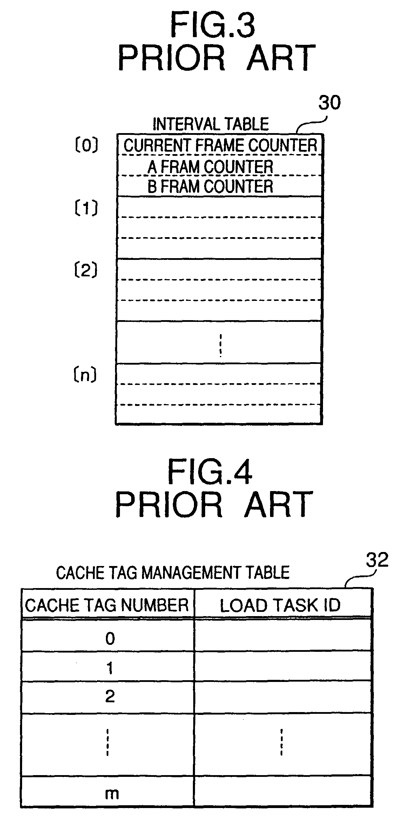

Referring to Fig. 3 together with Fig. 2, the interval table 30 is divided into zeroth through n-th regions assigned to zeroth through n-th ones of the tasks, respectively. In this connection, the value of "n" is smaller than the number of the tasks by 1. Each of the first through the n-th regions has a current frame counter portion for counting every current frame of the tasks, an A frame counter portion, and a B frame counter portion. The current frame counter portion and both of the A and B frame counter portions which will be used in a manner to be described later will be simply referred to as a current frame counter and A and B frame counters. The current frame counter issues an execution request related to the task in question when the count is equal to or smaller than zero. Each A frame counter indicates a value which is subtracted at the beginning of each frame from a predictive frame value of the current frame counter just before. The B frame counter indicates a value which is added to the count of the current frame counter at the end of execution of each task. An interval table monitor unit 11 illustrated in Fig. 1 refers to the interval table 30 and searches for the next execution task which is to be next started.

If the next following task is present in the interval table 30, a target bank detecting unit 15 accesses a cache tag management table 32 as shown in Fig. 4 and detects a bank which is ready to be allocated to the next execution task as a result of accessing the cache tag management table 32. Thereafter, the cache tag management table 32 is renewed so that a code allocated to the bank in question indicates a code assigned to the next execution task.

As shown in Fig. 4, the cache tag management table 32 serves to allocate task codes to the cache banks and is divided into zeroth through m-th areas assigned to zeroth through m-th ones of the cache banks, respectively. Each of the zeroth through the m-th areas stores the cache bank numbers which are given to the respective cache banks together with load task IDs which identify the loaded tasks stored into the cache banks, respectively. From this fact, it is readily understood that each of the zeroth and the m-th areas is loaded with each pair of the cache bank numbers and the load task IDs.

Referring back to Fig. 2, a loading operation unit 16 is coupled to the target bank detecting unit 15 to generate a command which is indicative of loading the bank detected by the target bank detecting unit 15 with the task code detected by the interval table monitor unit 11. A standby task registration unit 12 is coupled to a standby task table 31 to register an execution task into the standby task table 31. A task switching unit 13 switches from the current task to the next execution task registered in the standby task table 31.

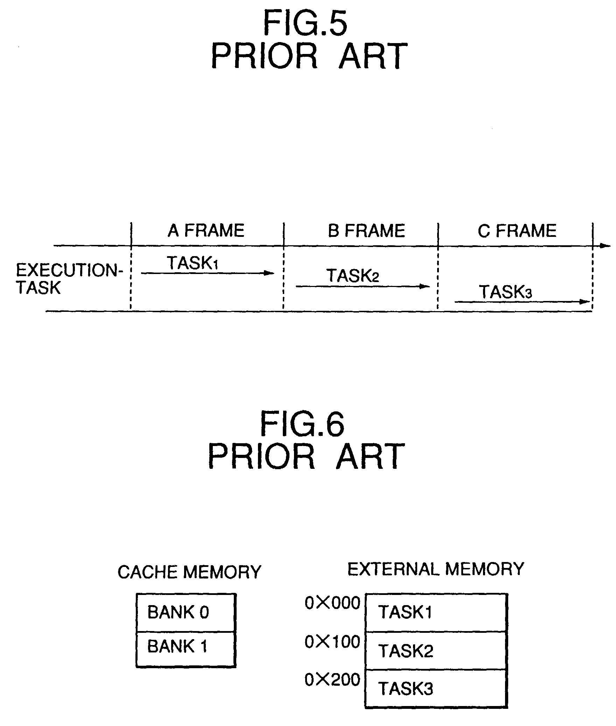

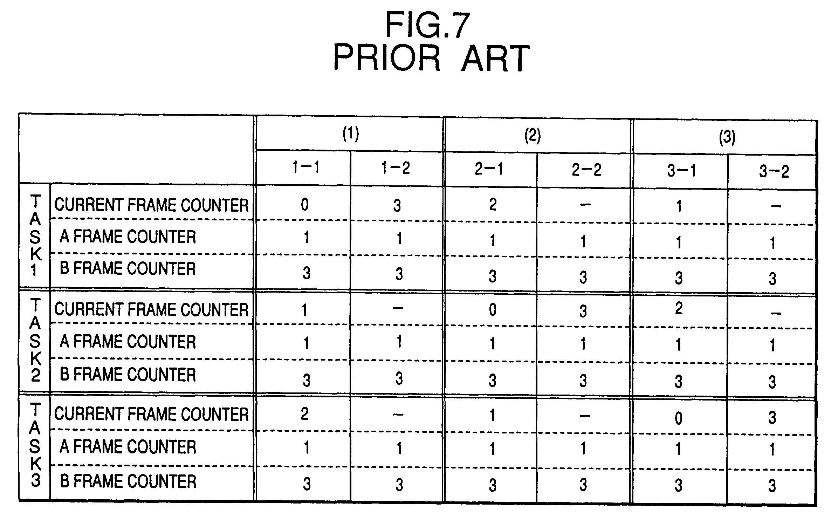

Now, the following description will be directed to a cache memory management process which is carried out by the conventional RTOS mentioned above. In the following, it is assumed that the process executes three tasks (TASK 1, 2, 3) according to the schedule as shown in Fig. 5 and that the cache memory and an external memory are formed as shown in Fig. 6. In this case, the external memory may be a main memory and stores the task codes in the illustrated manner. Further, it is also assumed that each of the task codes is nob allocated to a plurality of the cache banks in the cache memory during transmission from the external memory to the cache memory.

As mentioned above, a next one of the tasks to be executed in the next frame is determined by the count or value of the current frame counter included in the interval table 30. The interval table 30 is allocated to the TASK 1, 2,and 3 and is renewed in the manner illustrated in Fig. 7.

In Fig. 7, consideration is made about first, second, and third frames (1), (2), and (3) each of which is defined by a beginning state depicted at 1 and an end state depicted at 2. At the beginning states 1-1, 2-1, and 3-1, each current frame counter takes the value which is renewed by the interval table renewing unit 10 and which is given by:

$$C_C - C_A$$

where $C_C$ represents a value of each current frame counter and $C_A$ represents the value of each A frame counter. A renewed value is loaded with each current frame counter again. When the current frame counter becomes zero, it is judged that the task execution is requested.

At the end states 1-2, 2-2, and 3-2 of each frame, renewal of each current frame counter is carried out in accordance with the following:

$$C_C + C_B$$

where $C_B$ represents the value of each B frame counter. The renewed value is stored again in each current frame counter. No renewal is made about the current frame counter which is related to the tasks which are not being executed. For example, the current frame counter of TASK 1 is not renewed at the end state 2-2.

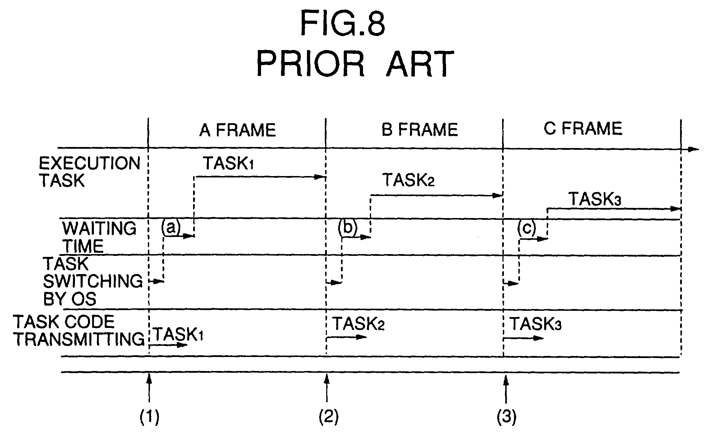

Referring to Fig. 8, illustration is made about a timing relationship among the tasks 1 to 3 which are executed in the manner illustrated in Fig. 7. In Fig. 8, the tasks 1, 2, and 3 are assumed to be started within frames A, B, and C and to be switched from one to another by the RTOS. The task codes are transmitted by the RTOS at the beginnings of the frames A, B, and C, as illustrated along the bottom line of Fig. 8. In this event, the RTOS starts the switching operation of the tasks 1, 2, and 3 simultaneously with the transmission of each task code. However, it takes a long time to transmit each task code in comparison with the switching operation of the tasks 1, 2, and 3. Therefore, a waiting or standby time inevitably appears as depicted at (a), (b), and (c) in Fig. 8 until execution of each task 1, 2, and 3.

A small number of the task codes alone can be transmitted while the standby task registration unit 12 and the task switch unit 13 are being operated. Therefore, the task switch operation is finished with the conventional RTOS before completion of the task code transmission. This shows that the standby or waiting time occurs at a high probability. In this case, the cache bank during transmission of the task code is put into a locked state. As a result, the task can not be executed at once but is put in a waiting state until completion of the task code transmission.

Such a waiting time is short as compared with a waiting time which occurs due to a miss hit of the cache memory. However, even such a short waiting time brings about a fatal delay in a digital signal processing system that strongly requires real time processing.

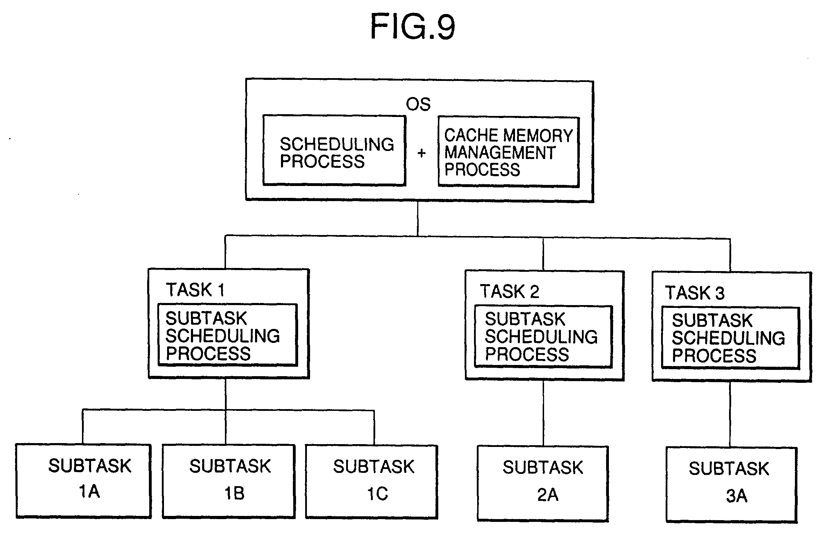

Referring Fig. 9, an RTOS according to a preferred embodiment of the present invention is conceptually illustrated which also manages cache control processing in addition to scheduling processing. This shows that the cache control processing is incorporated into the RTOS. On the other hand, the cache management processing is incorporated into one of the subtasks related to the tasks 1, 2, and 3, as shown in Fig. 1. With this structure according to the present invention, no cache management processing may be incorporated in the subtasks, differing from the RTOS illustrated in Fig. 1.

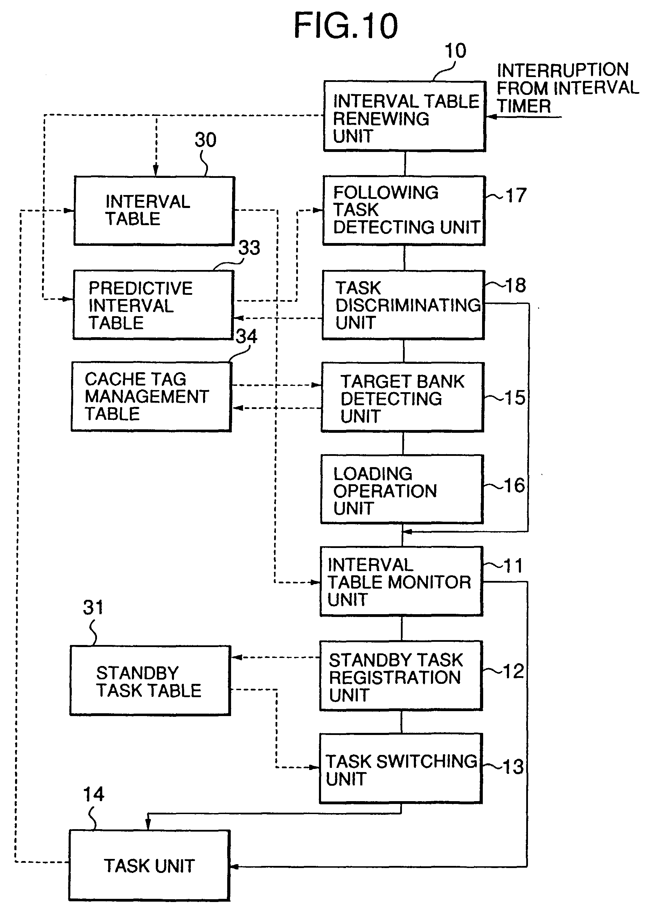

Referring Fig. 10 together with Fig, 9, the RTOS according to the preferred embodiment of this invention will be described in detail. Like in Fig. 2, the RTOS according to the present invention comprises components are similar to those illustrated in Fig. 2 and which are depicted at the same reference numerals as those of Fig. 2. Specifically, the illustrated RTOS further comprises a next execution task detecting unit 17, a task discriminating unit 18, an interval table monitor unit 11, and a predictive interval table 33 in addition to the elements illustrated in Fig. 2.

In Fig. 10, the interval table renewing unit 10 is coupled to both the interval table 30 and the predictive interval table 33 (as shown by broken lines) and renews both the interval table 30 and the predictive interval table 33 each time when an interval timer interruption is received from an external circuit. Herein, it is to be noted that the predictive interval table 33 previously or predictively indicates those contents of the interval table 30 which might occur in the future after the interval timer interruption is received several times.

The next task detecting unit 17 refers to the predictive interval table 33 to detect a next following execution task which may be executed at the next frame.

The task discriminating unit 18 compares the next task detected by the next task detecting unit 17 with the current task which is currently being executed. If the next task is coincident with the current one, then the task discriminating unit 18 decides not to load the cache memory with the task in question and transfers a processing to the interval table monitor unit 11. If the next task is not coincident with the current one, the task discriminating unit 18 decides to use the cache memory and transfers operation to the target bank detecting unit 15. The operation of using the cache memory will be simply called caching or caching operation.

On the caching operation, the target bank detecting unit 15 refers to the cache tag management table 34 to detect a bank which is allocable to the next task and which has an allocation code assigned thereto. Thereafter, the target bank detecting unit 15 renews the cache tag management table 34 so that the allocation code to the bank indicates the code of the next task.

In this sense, the cache tag management table is represented by a reference number 34 different from that in Fig. 4. Herein, it is to be noted that the execution flag indicates which one of tasks is being executed currently and is provided to avoid wrong loading on the executing bank.

The cache tag management table illustrated in Fig. 10 stores not only the cache bank number and the load task ID, but also an execution flag and is therefore different from that illustrated

The loading operation unit 16 is supplied with the bank which is detected by the target bank detecting unit 15 and which is specified by the allocation code. Under the circumstances, the loading operation unit 16 issues a command which is indicative of loading the bank under consideration with the next task detected by the next task detecting unit 17.

After the cache memory management process is finished in the above-mentioned manner, processing is executed by the interval table monitor unit 11, the standby task registration unit 12, and the task switching unit 13 in the manner mentioned in conjunction with Fig. 4.

Moreover, description will be made about the cache memory management process which are executed by the use of the RTOS according to the present invention. Herein, it is assumed that the cache memory and the external memory are structured as shown in Fig. 6 and that three tasks represented by TASK1, TASK2, and TASK3 are executed according to the schedule shown in Fig. 5.

At first, the interval table 30 is renewed in the manner mentioned in conjunction with the conventional interval table.

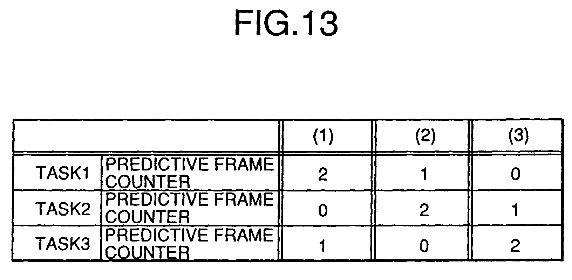

The predictive interval table 33 has a predictive current frame counters for the respective tasks TASK1, TASK2 and TASK3. Each predictive current frame counter acts like the current frame counter stored by the interval table 30 and is renewed in the manner shown in Fig. 13. The predictive current frame counters are assumed to be renewed in timed relation to renewal operation of the interval table 30 shown in Fig. 7. The predictive interval table 33 is renewed, like the interval table 30, by the interval table renewing unit 10. However, a renewing method of the predictive interval table 33 is different from that of each current frame counter. Specifically, if the current frame counter takes zero or less, renewal operation is executed in each predictive interval counter in accordance with the following formula:

$$C_R = C_C - C_A + C_B,$$

where CR represents the value of predictive frame counter; $C_C$, the value of the current frame counter; $C_A$ ,the value of the A frame counter; and $C_B$, the value of the B frame counter. If the counter is more than zero, the renewal operation is executed in accordance with the following formula:

$$C_R = C_C - C_A.$$

When the predictive frame counter becomes zero or less, it is judged that the task to be executed in the next frame is present and an execution request is issued in connection with the task. In this example, the predictive frame counter is indicative of the value or count before one frame in the current frame counter. As the banks are increased in number, the predictive frame counter may be indicative of the value before two or more frames in the current frame counter.

Referring to Fig. 13, the predictive frame counter for the TASK2 takes zero at the time instance (1) so that the next task detecting unit 17 predicts the TASK2 will be executed at the B frame. If the TASK2 is not loaded to the cache memory, the task discriminating unit 18 decides to load the cache memory with the task. Consequently, the loading operation unit 16 loads the TASK2 to the bank which is detected by the target bank detecting unit 15.

Likewise, commands are issued at the time instance (2), to predict an execution task at the B frame and to load the code of TASK3 which is not loaded to the cache memory.

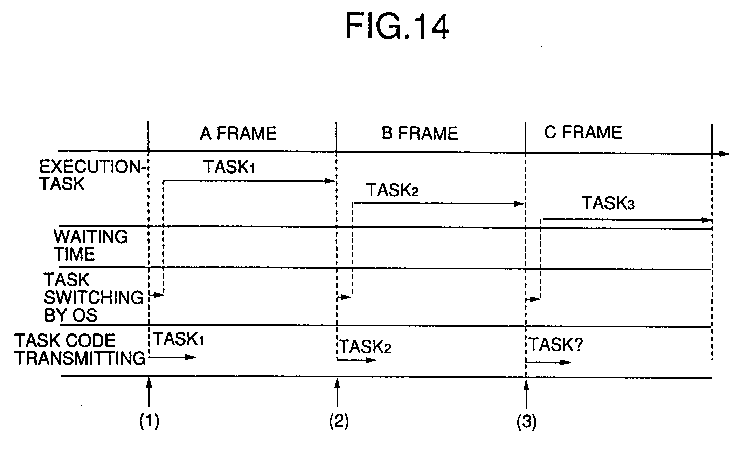

Referring to Fig. 14, illustration is made about the caching operation which is executed in the above-mentioned manner. Fig. 14 shows a time chart of a task code transmitting operation of the TASK1-3, a task switching operation, and a task executing operation when the predictive interval table 33 is renewed as shown in Fig. 13. In Fig. 14, the task code transmitting operation has finished before the task switching operation to the next task by using the cache memory management process of this invention. As a result, no waiting or standby time takes place in accordance with this invention.

As mentioned above, this invention can eliminate any waiting time which might wait for complete code transmission to the cache memory at the beginning of executing program or programs.

While this invention has thus far been described in a embodiment thereof, it will be readily possible for those skilled in the art to put this invention into various other manners.

**Claims**

1. A method of managing a cache memory which is controlled by a processing unit to store a plurality of tasks including a current task and a following task which is to be executed after execution of the current task, characterized by the steps of:

   loading the next task during the execution of the current task to the cache memory; and switching the current task to the next task read out the cache memory after completion of the execution of the current task.

2. A method of managing a cache memory divided into a plurality of cache banks and controlled by a processing unit to store a plurality of tasks each of which is processed at every one of frames and which includes a current task and a following task to be executed after the current task, characterized by:

   a following task detecting step of detecting the following task;
   a task discriminating step of discriminating between the following task and each of loaded tasks which are currently stored in the cache memory together and which includes the current task;
   a target bank detecting step of detecting a ready one of the cache banks that is not loaded with the current task and that is ready for memorizing the following task, if the following task is not present in the cache memory as a result of discriminating the loaded tasks in the task discriminating step; and
   a loading step of loading the following task with the ready cache bank before the execution of the following task when the following task is not present in the cache memory.

3. A method as claimed in claim 2, characterized in that said following task detecting step comprises the steps of:

   preparing frame counters allocated to the respective tasks and precedent frame counters each of which is allocated a single one of the frame counters and each value of which is assigned to a value of the allocated frame counter at a future frame; and
   regarding the task indicated by the precedent frame counter as said following task when the precedent frame counter becomes equal to a predetermined value.

4. A method as claimed in claim 2, characterized in that said target bank detecting step comprises the step of preparing a cache tag management table which includes a cache bank number which is given to each of the cache banks, a load task ID which is given to each of the loaded tasks stored into the cache banks, and an execution flag representative of whether or not the task is being executed.

5. A method as claimed in claim 4, characterized in that said target bank detecting step comprises the steps of:

   referring to said cache tag management table; and
   regarding, as said ready cache bank, one of the cache banks specified by said execution flag which indicates no execution.

6. A method as claimed in claim 3, characterized in that said target bank detecting step comprises the step of preparing a cache tag management table which includes a cache bank number which is given to each of the cache banks, a load task ID which is given to each of the loaded tasks stored into the cache banks, and an execution flag representative of whether or not the task is being executed.

7. A method as claimed in claim 6, characterized in that said target bank detecting step comprises the steps of:

   referring to said cache tag management table; and
   regarding, as said ready cache bank, one of the cache banks specified by said execution flag which indicates no execution.

8. A machine readable medium which stores a Real Time Cperating System (RTOS) to be executed by a processing unit in cooperation with a cache memory for storage a plurality of tasks, characterized in that said RTOS has a process of a cache management process which detects a following task to be executed after execution of the current task and which loads the following task with the cache memory, said cache management process being not included in the tasks.

9. A machine readable medium as claimed in claim 8, characterized in that said cache management process defines:

   a following task detecting process of detecting the following task;
   a task discriminating process of discriminating between the following task and each of loaded tasks which are currently stored in the cache memory together and which includes the current task;

a target bank detecting process of detecting a ready one of the cache banks that is not loaded with the current task and that is ready for memorizing the following task, if the following task is not present in the cache memory as a result of discriminating the loaded tasks in the task discriminating process; and

a loading process of loading the following task to the ready cache bank before the execution of the following task when the following task is not present in the cache memory.

10. A machine readable medium as claimed in claim 8, characterized in that said following task detecting process comprises processes of:

preparing frame counters allocated to the respective tasks and precedent frame counters each of which is allocated a single one of the frame counters and each value of which is assigned to the value of the allocated frame counter at a future frame; and

regarding the task indicated by the precedent frame counter as said following task when the precedent frame counter becomes equal to a predetermined value.

11. A machine readable medium as claimed in claim 9, characterized in that the RTOS comprises defines a process of preparing a cache tag management table which includes a cache bank number which is given to each of the cache banks, a load task ID which is given to each of the loaded tasks stored into the cache banks, and an execution flag representative of whether or not the task is being executed.

12. A machine readable medium as claimed in claim 11, characterized in that the RTOS defines the processes of:

referring to said cache tag management table; and

regarding, as said ready cache bank, one of the cache banks specified by said execution flag which indicates no execution.

13. A machine readable medium as claimed in claim 10, characterized in that the RTOS comprises a process of preparing a cache tag management table which includes a cache bank number which is given to each of the cache banks, a load task ID which is given to each of the loaded tasks stored into the cache banks, and an execution flag representative of whether or not the task is being executed.

14. A machine readable medium as claimed in claim 13, characterized in that the RTOS defines the processes of:

referring to said cache tag management table; and

regarding, as said ready cache bank, one of the cache banks specified by said execution flag which indicates no execution.

15. A processing unit which has a cache memory for storage of a plurality of tasks, the processing unit comprising:

following task detecting means for detecting the following task;

task discriminating means for discriminating between the following task and each of loaded tasks which are currently stored in the cache memory together and which includes the current task;

target bank detecting means for detecting a ready one of the cache banks that is not loaded with the current task and that is ready for memorizing the following task, if the following task is not present in the cache memory by discriminating the loaded tasks in the task discriminating means; and

loading means of loading the following task to the ready cache bank before the execution of the following task when the following task is not present in the cache memory.

16. A processing unit as claimed in claim 15, characterized in that said following task detecting means comprises:

a plurality of frame counters allocated to the respective tasks;

a plurality of precedent frame counters each of which is allocated to the frame counter and each value of which is representative of a value of the allocated frame counter at a future frame; and

means for regarding the task indicated by each of the precedent frame counters as said following task when each precedent frame counter becomes equal to a predetermined value.

17. A processing unit as claimed in claim 15, characterized by:

means for generating an execution flag representative of whether or not the task is being executed; and

means for regarding, as said ready cache bank, one of the cache banks specified by said execution flag which indicates no execution.

7

**18.** A processing unit as claimed in claim 16, characterized by:

means for generating an execution flag representative of whether or not the task is being executed; and
means for regarding, as said ready cache bank, one of the cache banks specified by said execution flag which indicates no execution.

**19.** An audio-visual signal processing system which has a microcomputer and a cache memory for storage of a plurality of tasks, the audio-visual signal processing system characterized by:

following task detecting means for detecting the following task;
task discriminating means for discriminating between the following task and each of loaded tasks which are currently stored in the cache memory together and which includes the current task;
target bank detecting means for detecting a ready one of the cache banks that is not loaded with the current task and that is ready for memorizing the following task, if the following task is not present in the cache memory by discriminating the loaded tasks in the task discriminating means; and
loading means for loading the following task to the ready cache bank before the execution of the following task when the following task is not present in the cache memory.

**20.** An audio-visual signal processing system as claimed in claim 19, characterized in that said following task detecting means comprises:

a plurality of frame counters allocated to the respective tasks;
a plurality of precedent frame counters each of which is allocated to the frame counter and each value of which is representative of a value of the allocated frame counter at a future frame; and
means for regarding the task indicated by each of the precedent frame counters as said following task when the precedent frame counter becomes equal to a predetermined value.

**21.** An audio-visual signal processing system as claimed in claim 19, characterized by:

means for generating an execution flag representative of whether or not the task is being executed; and
means for regarding, as said ready cache bank, one of the cache banks specified by said execution flag which indicates no execution.

**22.** An audio-visual signal processing system as claimed in claim 20, characterized by:

means for generating an execution flag representative of whether or not the task is being executed; and
means for regarding, as said ready cache bank, one of the cache banks specified by said execution flag which indicates no execution.

**23.** A portable telephone which has a microcomputer and a cache memory for storage of a plurality of tasks, the portable telephone characterized by:

following task detecting means for detecting the following task;
task discriminating means for discriminating between the following task and each of loaded tasks which are currently stored in the cache memory together and which includes the current task;
target bank detecting means for detecting a ready one of the cache banks that is not loaded with the current task and that is ready for memorizing the following task, if the following task is not present in the cache memory by discriminating the loaded tasks in the task discriminating means; and
loading means for loading the following task to the ready cache bank before the execution of the following task when the following task is not present in the cache memory.

**24.** A portable telephone as claimed in claim 23, characterized in that said following task detecting means comprises:

a plurality of frame counters allocated to the respective tasks;
a plurality of precedent frame counters each of which is allocated to the frame counter and each value of which is representative of a value of the allocated frame counter at a future frame; and
means for regarding the task indicated by each of the precedent frame counters as said following task when the precedent frame counter becomes equal to a predetermined value.

**25.** A portable telephone as claimed in claim 23, characterized by:

means for generating an execution flag representative of whether or not the task is being executed; and
means for regarding, as said ready cache bank, one of the cache banks specified by said execution flag which indicates no execution.

26. A portable telephone as claimed in claim 24, characterized by:

means for generating an execution flag representative of whether or not the task is being executed; and
means for regarding, as said ready cache bank, one of the cache banks specified by said execution flag which indicates no execution.

# FIG.1
## PRIOR ART

```
                    ┌─────────────────────────┐
                    │          OS             │
                    │  ┌───────────────────┐  │
                    │  │    SCHEDULING     │  │
                    │  │    PROCESS        │  │
                    │  └───────────────────┘  │
                    └─────────────────────────┘
                                 │
         ┌───────────────────────┼───────────────────────┐
         │                       │                        │
┌────────────────────┐  ┌────────────────────┐  ┌────────────────────┐
│ TASK 1             │  │ TASK 2             │  │ TASK 3             │
│ ┌────────────────┐ │  │ ┌────────────────┐ │  │ ┌────────────────┐ │
│ │ SUBTASK        │ │  │ │ SUBTASK        │ │  │ │ SUBTASK        │ │
│ │ SCHEDULING     │ │  │ │ SCHEDULING     │ │  │ │ SCHEDULING     │ │
│ │ PROCESS        │ │  │ │ PROCESS        │ │  │ │ PROCESS        │ │
│ └────────────────┘ │  │ └────────────────┘ │  │ └────────────────┘ │
└────────────────────┘  └────────────────────┘  └────────────────────┘
         │                       │                        │
 ┌───────┼───────┐               │                        │
```

| | | | | |
|---|---|---|---|---|
| SUBTASK 1A | SUBTASK 1B | SUBTASK 1C | SUBTASK 2A | SUBTASK 3A |
| CACHE MEMORY MANAGEMENT PROCESS | | | CACHE MEMORY MANAGEMENT PROCESS | CACHE MEMORY MANAGEMENT PROCESS |

EP 0 884 682 A2

# FIG.2
# PRIOR ART

INTERRUPTION FROM INTERVAL TIMER

10 — INTERVAL TABLE RENEWING UNIT

30 — INTERVAL TABLE

11 — INTERVAL TABLE MONITOR UNIT

32 — CACHE TAG MANAGEMENT TABLE

15 — TARGET BANK DETECTING UNIT

16 — LOADING OPERATION UNIT

31 — STANDBY TASK TABLE

12 — STANDBY TASK REGISTRATION UNIT

13 — TASK SWITCHING UNIT

14 — TASK UNIT

# FIG.3
# PRIOR ART

INTERVAL TABLE                                    30

| | |
|---|---|
| [0] | CURRENT FRAME COUNTER |
| | A FRAM COUNTER |
| | B FRAM COUNTER |
| [1] | |
| | |
| [2] | |
| | |
| | ⋮ |
| [n] | |
| | |

# FIG.4
# PRIOR ART

CACHE TAG MANAGEMENT TABLE                        32

| CACHE TAG NUMBER | LOAD TASK ID |
|---|---|
| 0 | |
| 1 | |
| 2 | |
| ⋮ | ⋮ |
| m | |

# FIG.5
# PRIOR ART

| | A FRAME | B FRAME | C FRAME |
|---|---|---|---|
| EXECUTION-TASK | TASK1 → | TASK2 → | TASK3 → |

# FIG.6
# PRIOR ART

CACHE MEMORY

| BANK 0 |
|---|
| BANK 1 |

EXTERNAL MEMORY

| | |
|---|---|
| 0×000 | TASK1 |
| 0×100 | TASK2 |
| 0×200 | TASK3 |

# FIG.7
# PRIOR ART

| | | (1) | | (2) | | (3) | |
|---|---|---|---|---|---|---|---|
| | | 1−1 | 1−2 | 2−1 | 2−2 | 3−1 | 3−2 |
| **T A S K 1** | CURRENT FRAME COUNTER | 0 | 3 | 2 | − | 1 | − |
| | A FRAME COUNTER | 1 | 1 | 1 | 1 | 1 | 1 |
| | B FRAME COUNTER | 3 | 3 | 3 | 3 | 3 | 3 |
| **T A S K 2** | CURRENT FRAME COUNTER | 1 | − | 0 | 3 | 2 | − |
| | A FRAME COUNTER | 1 | 1 | 1 | 1 | 1 | 1 |
| | B FRAME COUNTER | 3 | 3 | 3 | 3 | 3 | 3 |
| **T A S K 3** | CURRENT FRAME COUNTER | 2 | − | 1 | − | 0 | 3 |
| | A FRAME COUNTER | 1 | 1 | 1 | 1 | 1 | 1 |
| | B FRAME COUNTER | 3 | 3 | 3 | 3 | 3 | 3 |

# FIG.8
## PRIOR ART

EP 0 884 682 A2

# FIG.9

EP 0 884 682 A2

```
┌─────────────────────────────────────────────┐
│                    OS                         │
│  ┌──────────────┐     ┌──────────────────┐   │
│  │ SCHEDULING   │  +  │ CACHE MEMORY     │   │
│  │ PROCESS      │     │ MANAGEMENT       │   │
│  │              │     │ PROCESS          │   │
│  └──────────────┘     └──────────────────┘   │
└─────────────────────────────────────────────┘
```

```
┌─────────────────┐    ┌─────────────────┐   ┌─────────────────┐
│ TASK 1          │    │ TASK 2          │   │ TASK 3          │
│ ┌─────────────┐ │    │ ┌─────────────┐ │   │ ┌─────────────┐ │
│ │ SUBTASK     │ │    │ │ SUBTASK     │ │   │ │ SUBTASK     │ │
│ │ SCHEDULING  │ │    │ │ SCHEDULING  │ │   │ │ SCHEDULING  │ │
│ │ PROCESS     │ │    │ │ PROCESS     │ │   │ │ PROCESS     │ │
│ └─────────────┘ │    │ └─────────────┘ │   │ └─────────────┘ │
└─────────────────┘    └─────────────────┘   └─────────────────┘
```

```
┌──────────┐  ┌──────────┐  ┌──────────┐   ┌──────────┐   ┌──────────┐
│ SUBTASK  │  │ SUBTASK  │  │ SUBTASK  │   │ SUBTASK  │   │ SUBTASK  │
│ 1A       │  │ 1B       │  │ 1C       │   │ 2A       │   │ 3A       │
└──────────┘  └──────────┘  └──────────┘   └──────────┘   └──────────┘
```

# FIG.10

INTERRUPTION FROM INTERVAL TIMER

INTERVAL TABLE RENEWING UNIT ~10

FOLLOWING TASK DETECTING UNIT ~17

INTERVAL TABLE 30

TASK DISCRIMINATING UNIT ~18

PREDICTIVE INTERVAL TABLE 33

CACHE TAG MANAGEMENT TABLE 34

TARGET BANK DETECTING UNIT ~15

LOADING OPERATION UNIT ~16

INTERVAL TABLE MONITOR UNIT ~11

STANDBY TASK TABLE 31

STANDBY TASK REGISTRATION UNIT ~12

TASK SWITCHING UNIT ~13

TASK UNIT 14

17

# FIG.11

PREDICTIVE INTERVAL
TABLE                          33

|       | PREDICTIVE FRAME COUNTER |
|-------|--------------------------|
| [0]   |                          |
| [1]   |                          |
| [2]   |                          |
| ⋮     | ⋮                        |
| [n]   |                          |

# FIG.12

CACHE TAG MANAGEMENT TABLE                    34

| CACHE BANK NUMBER | LOAD TASK ID | EXECUTION FLAG |
|-------------------|--------------|----------------|
| 0                 |              |                |
| 1                 |              |                |
| 2                 |              |                |
| ⋮                 | ⋮            | ⋮              |
| m                 |              |                |

# FIG.13

|  |  | (1) | (2) | (3) |
|---|---|---|---|---|
| TASK1 | PREDICTIVE FRAME COUNTER | 2 | 1 | 0 |
| TASK2 | PREDICTIVE FRAME COUNTER | 0 | 2 | 1 |
| TASK3 | PREDICTIVE FRAME COUNTER | 1 | 0 | 2 |

# FIG.14

EP 0 884 682 A2